# EUROPÄISCHE PATENTSCHRIFT

(11) **EP 3 562 361 B1**
(45) Veröffentlichungstag und Bekanntmachung des Hinweises auf die Patenterteilung: **27.05.2026**
(21) Anmeldenummer: 17829297.5
(22) Anmeldetag: 18.12.2017
(51) Int. Cl.: A47J 36/24

(54) **LUNCHGEFÄSS**
LUNCH VESSEL
BOÎTE REPAS

(30) Priorität: 28.12.2016 CH 17532016
(43) Veröffentlichungstag der Anmeldung: 06.11.2019
(73) Patentinhaber: Faitron AG, 8001 Zürich (CH)
(72) Erfinder: GRAF, Fabian, 8049 Zürich (CH); KENESSEY, Aron, 5600 Lenzburg (CH)
(74) Vertreter: Wenzel Nemetzade Warthmüller Patentanwälte Part mbB
(86) Internationale Anmeldenummer: PCT/IB2017/058035
(87) Internationale Veröffentlichungsnummer: WO 2018/122669

(56) Entgegenhaltungen:
- DE-A1- 102007 036 361
- US-A1- 2015 245 723
- US-A1- 2015 245 723
- US-A1- 2016 242 598
- US-A1- 2016 242 598
- US-B1- 6 852 954
- US-B1- 6 852 954
- US-B1- 7 431 613
- US-B1- 7 431 613

## Beschreibung

Die Erfindung betrifft ein Lunchgefäss zum Aufbewahren, zum Transport und zum Erwärmen von Lebensmitteln und Getränken, insbesondere von zum Verzehr vorbereiteten Lebensmitteln und Getränken für Kleinkinder und Babys.

Es handelt sich um ein Lunchgefäss, welches es erlaubt, vorbereitete Speisen und Getränke zum Beispiel für unterwegs oder auf Reisen mitzunehmen und vor Ort innert weniger Minuten zu erwärmen und so jederzeit und überall eine warme Mahlzeit resp. ein warmes Getränk, insbesondere Milch zu ermöglichen.

Bekannt sind beheizbare Lunchboxen mit einem aufklappbaren Deckel oder Seitenteil, wobei der Verschluss des Deckels oder Seitenteils mittels Reissverschluss oder Klettband erfolgt.

Ein Behälter für Esswaren, insbesondere Brot und Belag, gemäss WO 2011/112284 A1 weist einen flexiblen Teiler auf, um eine Ober- und eine Unterschale zu erhalten. Er dient ausschliesslich dem Halten einer vorhandenen Temperatur der Esswaren mittels eines eingelegten Heiz- oder Kühlgels.

Aus der DE 202013010997 U1 ist ein Klappbehälter bekannt, der so gestaltet ist, dass beim Aufklappen einer Oberschale keine Gegenstände herausfallen können. Der Klappbehälter besteht aus einer Oberschale und einer Unterschale, die an einer Längsseite miteinander klappbar verbunden sind. An der gegenüberliegenden Längsseite ist ein Rastverschluss vorgesehen. Die Oberschale ist mit einem oberen Innendeckel und die Unterschale mit einem unteren Innendeckel versehen, so dass die beiden Innenvolumen vollständig und unabhängig voneinander verschliessbar sind. An der, der Anlenkung der Innendeckel gegenüberliegenden Seite ist jeweils ein Deckelverschluss in Form einer Rastnase in der Oberschale und der Unterschale vorgesehen.

In der WO 2015/177726 A1 ist eine Lunchbox offenbart, die zum Aufbewahren, zum Transport und zum Erwärmen von Lebensmitteln, insbesondere von verzehrfertigen Lebensmitteln geeignet ist. Sie umfasst eine Oberschale und eine Unterschale, die an einer Längsseite miteinander klappbar verbunden sind, wobei an der gegenüberliegenden Längsseite ein Verschluss vorgesehen ist. In der Unterschale ist eine Innenschale mit einem umlaufenden und abgewinkelten Randbereich anordenbar, der eine thermische Isolation und ein Heizelement zugeordnet ist, wobei im umlaufenden Randbereich der Innenschale eine Nut zur Aufnahme einer Dichtung eingeformt ist.

Die US 2015/0245723 A1 offenbart Trinkgefässe, die aktiv beheizbar oder kühlbar sind. Diese weisen eine zylindrische Aussenhülle mit einem geschlossenen Boden auf. Die obere Deckfläche ist mit einem Deckel verschliessbar. In der Aussenhülle ist ein erwärmbarer Innenzylinder vorgesehen. Die Energieversorgung erfolgt mittels integrierter Batterien in einem doppelten Boden, was insgesamt ein hohes Gewicht des Gefässes bewirkt.

Der vorgenannte Stand der Technik ist nicht zur Benutzung durch Kleinkinder geeignet und auch nicht zur Aufnahme, Erwärmung und Warmhaltung von Getränken geeignet. Bekannt sind aber normale Babyflaschen, welche in einen mehrseitigen Wärmebehälter gesteckt werden können, vergleichbar zu einem Wasserbad mit Heizelementen.

Weiterhin gibt es normale Kaffeebecher für unterwegs, welche von unten erwärmen, die jedoch nur für Heissgetränke und für Erwachsene konzipiert sind.

Die Aufgabe der Erfindung besteht darin, ein Lunchgefäss für Kleinkinder und Babys zu entwickeln, das zum Aufbewahren, zum Transport und zum Erwärmen von Lebensmitteln und Getränken geeignet ist und welches von kleinen Kindern einfach und sicher gehandhabt werden kann.

Diese Aufgabe ist von einem Lunchgefäss mit den Merkmalen des Patentanspruchs 1 gelöst, welche in ihrer äusseren Erscheinung ähnlich wie eine Trinkflasche gestaltet ist. Es umfasst eine im Wesentlichen zylindrische und wärmeisolierende Aussenhülle mit geschlossenem Boden, deren obere Deckfläche mit einem Deckel verschliessbar ist. In der Aussenhülle ist ein drahtlos, zum Beispiel induktiv, erwärmbarer Innenzylinder mit einem Boden angeordnet. Erwärmbar sind insbesondere breiartige Speisen und Getränke, wie Milch oder Tee.

Um die Speisen oder Getränke zu erwärmen, sind der Boden und auch die Wand des Innenzylinders erwärmbar. Dank der eingesetzten Isolation der Aussenhülle kann diese kaum mehr als handwarm werden. Beim Gebrauch des Lunchgefässes ist somit ausgeschlossen, dass sich der Nutzer, ein Erwachsener, wie auch ein Baby oder Kleinkind, Verletzungen, insbesondere Verbrennungen zuziehen kann. Es ermöglicht zudem eine gleichmässige Erwärmung ohne "hot spots",

Eine Energieversorgung für den Innenzylinder erfolgt drahtlos, zum Beispiel induktiv, so dass die Aussenhülle ggf. keine Anschlüsse oder Schalter aufweisen muss. Für unterwegs ist ebenfalls die Verwendung einer Power Bank o. a. möglich. Ein Ladegerät kann auf dem üblichen Stromnetz von 230V AC, oder aber auf 5/20V oder 12/24V DC basieren, sodass ein Anschluss an einen Computer mittels USB-Schnittstelle oder an einen Zigarettenanzünder eines Autos möglich ist.

In den vorbekannten Gefässen oder Kaffeebechern sind hingegen breiartige Speisen für Kinder nicht erwärmbar und nicht direkt durch Kleinkinder konsumierbar.

Bevorzugte Ausgestaltungen der Erfindung sind in den abhängigen Ansprüchen offenbart.

Für eine sichtbare Anzeige des Füllstands des Innenzylinders kann dieser mit einem, bevorzugt transparenten Spalt versehen sein, mit einer Formentsprechung in der Aussenhülle. Alternativ ist auch eine optische/elektronische Anzeige möglich.

Zum Beispiel kann der Deckel mit einem Innengewinde zur Verschraubung mit einem Aussengewinde der Aussenhülle versehen sein. Zur Erleichterung der Handhabung durch Kinder ist der Deckel vorzugsweise mit mindestens einem angeformten Handgriff versehen, wobei der Griff auch am Deckel befestigbar ausgebildet sein könnte. Besonders bevorzugt sind zwei Handgriffe vorgesehen. Der Handgriff ist so geformt, dass ihn kleine Kinder unterschiedlichen Alters sicher erfassen können.

In weiterhin bevorzugter Ausgestaltung ist der Deckel mit einer Öffnung zur Aufnahme eines Saugers versehen. Der Sauger kann an die Abgabe von Flüssigkeiten oder breiartige Speisen angepasst sein. Öffnung und Sauger sind durch eine aufsteckbare Schutzkappe vor äusseren Einflüssen schützbar.

Die Erfindung wird nachfolgend in Ausführungsbeispielen anhand von Zeichnungen näher beschrieben und ihre Funktion wird erklärt. Es zeigen die
- Fig. 1:: ein erfindungsgemässes Lunchgefäss mit Sauger;
- Fig. 2:: ein Lunchgefäss nach Fig. 1 mit Schutzkappe;
- Fig. 3:: ein Ladegerät für das Lunchgefäss;
- Fig. 4:: das erfindungsgemässe Lunchgefäss in einer anderen Ausführungsform;
- Fig. 5:: das erfindungsgemässe Lunchgefäss in einer weiteren Ausführungsform.

Ein erfindungsgemässes Lunchgefäss 1 ist ähnlich dimensioniert wie eine wie eine kurze und breite Trinkflasche oder Tasse.

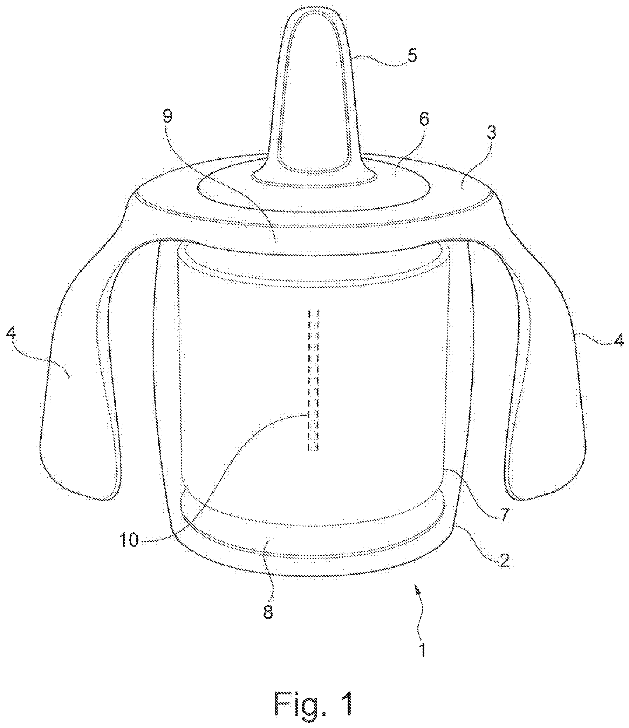

Die Fig. 1 zeigt eine Ausführung eines erfindungsgemässen Lunchgefässes 1. Es weist eine im Wesentlichen zylindrische und wärmeisolierende Aussenhülle 2 mit geschlossenem Boden auf, deren obere Deckfläche mit einem Deckel 3 verschlossen ist.

In der Aussenhülle 2 ist ein drahtlos, zum Beispiel induktiv, erwärmbarer Innenzylinder 7 mit einem Boden 8 angeordnet.

Die dem Deckel 3 zugewandte Stirnfläche des Innenzylinders 7 ist offen.

Dank der eingesetzten Isolation der Aussenhülle 2 kann diese kaum mehr als handwarm werden. Beim Gebrauch des Lunchgefässes ist somit ausgeschlossen ist, dass sich der Nutzer, ein Erwachsener, wie auch ein Baby oder Kleinkind, Verletzungen, insbesondere Verbrennungen zuziehen kann.

Für eine sichtbare Anzeige 10 des Füllstands des Innenzylinders 7 ist dieser mit einem Spalt 9 aus einem transparenten resp. durchsichtigen Kunststoff (oder einem bruchsicheren Glas) versehen, mit einer Formentsprechung in der Aussenhülle 2. Der Füllstand kann damit von aussen eingesehen werden.

Alternativ ist auch eine optische/elektronische Anzeige des Füllstands möglich.

Auf der Aussenhülle 2 ist zudem ein, zum Beispiel ringförmiger, Temperaturindikator 11 angebracht, der zum Beispiel anhand farbig leuchtender LED's bestimmte Temperaturen des im Gefäss befindlichen Getränks oder einer Speise anzeigt. Zum Beispiel eine grüne LED bei angemessener Trink-/Verzehrtemperatur oder eine rote oder blaue LED bei zu hoher oder zu geringer Temperatur. Alternativ kann der Temperaturindikator 11 mit den LED's auch in der Ladestation 12 implementiert sein.

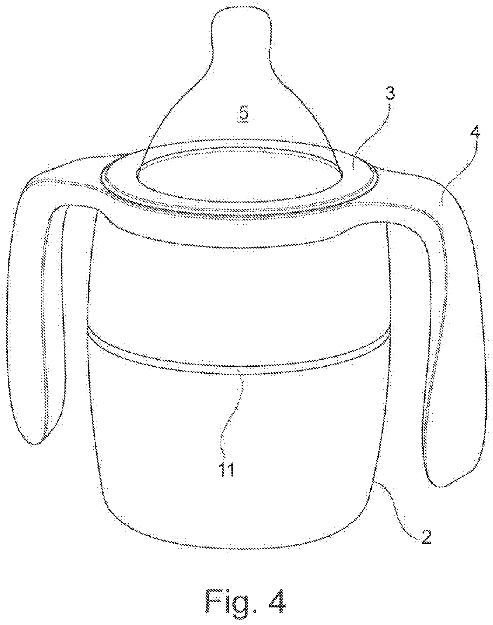

Die Aussenhülle 2 kann wie dargestellt einteilig oder auch auch zweiteilig ausgeführt sein. In zweiteiliger Ausführung umfasst die Aussenhülle 2 ein Unterteil und ein Oberteil, mit dazwischen befindlichem, ringförmigem Temperaturindikator (Fig. 4).

Der Deckel 3 mit einem Innengewinde zur Verschraubung mit einem Aussengewinde der Aussenhülle 2 versehen.

Zur Erleichterung der Handhabung durch Kinder ist der Deckel 3 in dieser Ausführungsform mit zwei angeformten Handgriffen 4 versehen, die so geformt sind, dass sie von kleinen Kindern unterschiedlichen Alters sicher erfasst werden können.

Weiterhin ist der Deckel 3 mit einer Öffnung 13 zur Aufnahme einer Basis 6 eines (von Trinkflaschen her bekannten) Saugers 5 versehen. Bevorzugt sind hierbei Schnapp- oder Rastverbindungen bei elastischen Kunststoffen oder eindrücken der Basis 6 in die Öffnung 13 bei verformbaren, gummiartigen Werkstoffen des Saugers 5.

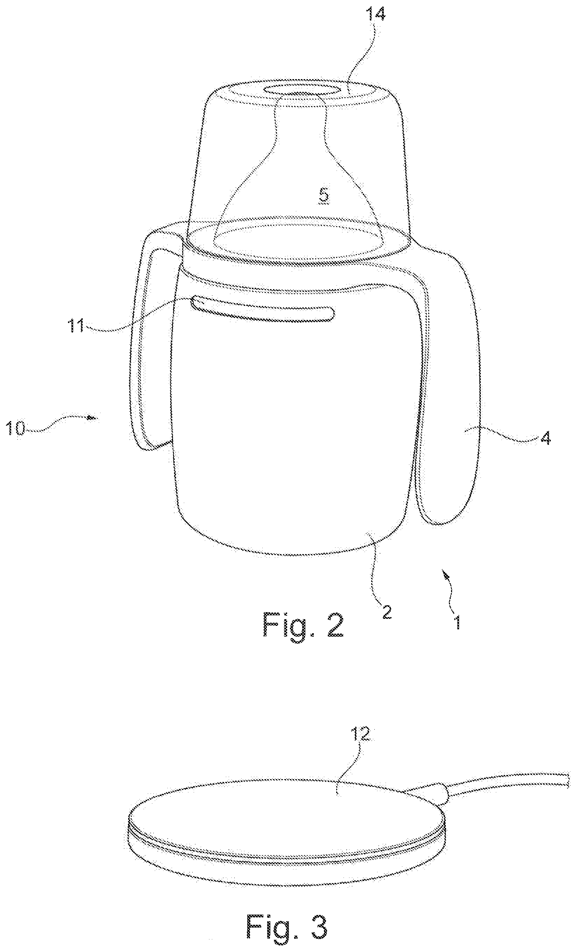

Öffnung 13 und Sauger 5 sind durch eine, auf den Deckel 3 aufsteckbare Schutzkappe 14 (Fig. 2) vor äusseren Einflüssen schützbar.

Je nach Konsistenz der breiartigen Speisen oder der Getränke können Sauger 5 aus unterschiedlichen, insbesondere elastischen Materialien und mit unterschiedlicher Saugöffnung verfügbar sein.

Erwärmbar sind insbesondere breiartige Speisen und Getränke, wie zum Beispiel Milch, Wasser, Tee oder trinkbare Suppen.

Die Ladestation 12 verfügt über einen "offline" button, um den Erwärmvorgang des Gefässes, der Flasche, zu starten.

Eine Energieversorgung für den Innenzylinder 7 und den Boden 8 erfolgt in der dargestellten Ausführungsform drahtlos und induktiv, so dass die Aussenhülle 2 keine Anschlüsse oder Schalter aufweisen muss. Das erfindungsgemässe Lunchgefäss 1 wird dazu mit dem Boden der Aussenhülle 2 auf die Ladefläche eines entsprechenden Ladegeräts 12 gestellt. Das Ladegerät 12 (Fig. 3) kann auf dem üblichen Stromnetz von 110-230V AC, oder aber auf 5/20V oder 12/24V DC basieren, sodass ein Anschluss an einen Computer mittels USB-Schnittstelle oder an einen Zigarettenanzünder eines Autos möglich ist.

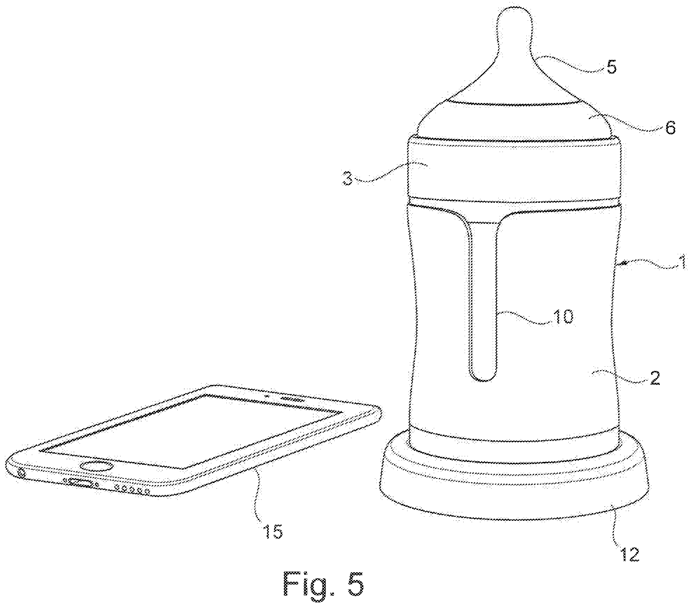

Die Fig. 5 zeigt das Lunchgefäss 1 in einer weiteren Ausführungsform mit erhöhtem Deckel 3. Der Deckel 3 kann daher auch ohne Handgriff ausgeführt sein oder lediglich einen Handgriff 4 aufweisen.

Die Erwärmung der Speise oder des Getränks, resp. eine Steuerungselektronik kann konventionell oder mittels einer App über ein Mobiltelefon 15 gesteuert werden, damit der Nutzer eine vorgesehene Temperatur exakt einstellen und kontrollieren kann. Möglich sind auch verschiedene Erwärmungsprogramme. Zusätzlich kann die Ladestation 12 noch weitere Funktionen beinhalten, zum Beispiel eine Gewichtserkennung, um das Gewicht (auch via App) vor und nach einem Trinkvorgang zu erkennen, bzw. wie viel das Baby getrunken hat.

Eine mögliche Steuerelektronik beinhaltet die elektronische Steuerung, eine Sicherheitsschaltung, einen Lastschalter und auch ein Netzteil. Die elektronische Steuerung sollte zumindest einen Temperatursensor, eine Heizungsschaltung, eine Start-Stopp-Schaltung und den Ausgang für die LED's umfassen. Die elektronische Steuerung kann auch verschiedene Heizmodi zulassen.

Der Innenzylinder 7 und und der Boden 8 sind selbst als Heizelement ausgebildet.

### Liste der Bezugszeichen

- 1: Lunchgefäss
- 2: Aussenhülle
- 3: Deckel
- 4: Handgriff
- 5: Sauger
- 6: Saugerbasis
- 7: Innenzylinder
- 8: Boden
- 9: Spalt
- 10: Füllstandsanzeige
- 11: Temperaturindikator
- 12: Ladestation
- 13: Öffnung
- 14: Schutzkappe
- 15: Mobiltelefon

## Patentansprüche

1. Lunchgefäss zum Aufbewahren, zum Transport und zum Erwärmen von Lebensmitteln und Getränken, insbesondere von zum Verzehr vorbereiteten Lebensmitteln und Getränken für Kleinkinder und Babys, umfassend eine im Wesentlichen zylindrische Aussenhülle (2) mit geschlossenem Boden, deren obere Deckfläche mit einem Deckel verschliessbar ist, wobei in der Außenhülle (2) ein Innenzylinder (7) mit einem Boden (8) angeordnet ist und der Boden (8) und der Innenzylinder (7) als Heizelement ausgebildet sind, **dadurch gekennzeichnet, dass** der Innenzylinder (7) zur Aufnahme von Lebensmitteln und Getränken ausgebildet ist, dass der Innenzylinder (7) mit dem Boden (8) drahtlos erwärmbar ist und dass die Energieversorgung für den Innenzylinder (7) und den Boden (8) drahtlos ist.

2. Lunchgefäss nach Anspruch 1, **dadurch gekennzeichnet, dass** der Innenzylinder (7) mit einem Spalt (9) für eine Füllstandsanzeige (10) versehen ist..

3. Lunchgefäss nach Anspruch 1 oder 2, **dadurch gekennzeichnet, dass** der Deckel mit einem Innengewinde zur Verschraubung mit einem Aussengewinde der Aussenhülle (2) versehen ist.

4. Lunchgefäss nach einem der Ansprüche 1 bis 3, **dadurch gekennzeichnet, dass** der Deckel (3) mit mindestens einem angeformten Griff (4) versehen ist.

5. Lunchgefäss nach einem der Ansprüche 1 bis 4, **dadurch gekennzeichnet, dass** der Deckel mit einer Öffnung (13) zur Aufnahme eines Saugers (5) versehen ist.

6. Lunchgefäss nach einem der Ansprüche 1 bis 5, **dadurch gekennzeichnet, dass** der Boden (8) induktiv erwärmbar ist.

7. Lunchgefäss nach einem der Ansprüche 1 bis 6, **dadurch gekennzeichnet, dass** der Innenzylinder (7) induktiv erwärmbar ist.

8. Lunchgefäss nach einem der Ansprüche 1 bis 7, **dadurch gekennzeichnet, dass** es mittels einer App über ein Mobiltelefon (15) steuerbar ist.

9. Lunchgefäss nach einem der Ansprüche 1 bis 8, **dadurch gekennzeichnet, dass** es mit einer Ladestation (12) koppelbar ist und dass die Ladestation (12) mit einem Temperaturindikator (11) und/oder einer Gewichtserkennung versehen ist.

10. Lunchgefäss nach einem der Ansprüche 1 bis 9, **dadurch gekennzeichnet, dass** es mittels einer implementierten Steuerelektronik offline oder online steuerbar und betreibbar ist.

## Claims

1. Lunch container for storing, transporting and heating food and drinks, in particular food and drinks prepared for consumption by infants and babies, comprising a substantially cylindrical outer shell (2) with a closed base, the upper face of which can be sealed with a lid, wherein an inner cylinder (7) with a base (8) is arranged within the outer shell (2), and the base (8) and the inner cylinder (7) are designed as a heating element, **characterised in that** the inner cylinder (7) is designed to hold food and drinks, that the inner cylinder (7) with the base (8) can be heated wirelessly and that the power supply for the inner cylinder (7) and the base (8) is wireless.

2. Lunch container according to claim 1, **characterised in that** the inner cylinder (7) is provided with a gap (9) for a level indicator (10).

3. Lunch container according to claim 1 or 2, **characterised in that** the lid is provided with an internal thread for screwing onto an external thread of the outer shell (2).

4. Lunch container according to any one of claims 1 to 3, **characterised in that** the lid (3) is provided with at least one moulded-on handle (4).

5. Lunch container according to any one of claims 1 to 4, **characterised in that** the lid is provided with an opening (13) for receiving a suction cup (5).

6. Lunch container according to any one of claims 1 to 5, **characterised in that** the base (8) is capable of being heated inductively.

7. Lunch container according to any one of claims 1 to 6, **characterised in that** the inner cylinder (7) is inductively heatable.

8. Lunch container according to any one of claims 1 to 7, **characterised in that** it is controllable via an app on a mobile phone (15).

9. Lunch container according to any one of claims 1 to 8, **characterised in that** it can be coupled to a charging station (12) and that the charging station (12) is provided with a temperature indicator (11) and/or a weight sensor.

10. Lunch container according to any one of claims 1 to 9, **characterised in that** it can be controlled and operated offline or online by means of implemented control electronics.

## Revendications

1. Boîte à déjeuner permettant de conserver, de transporter et de réchauffer des aliments et des boissons, en particulier des aliments et des boissons préparés pour être consommés par des enfants en bas âge et des bébés, comprenant une enveloppe extérieure (2) sensiblement cylindrique et comportant un fond fermé, dont la surface de recouvrement supérieure peut être fermée par un moyen de recouvrement, dans laquelle un cylindre intérieur (7) comportant un fond (8) est disposé dans l'enveloppe extérieure (2) et le fond (8) et le cylindre intérieur (7) sont conçus en tant qu'élément chauffant, **caractérisée en ce que** le cylindre intérieur (7) est conçu pour la réception d'aliments et de boissons, **en ce que** le cylindre intérieur (7) peut être chauffé sans fil avec le fond (8) **et en ce que** l'alimentation en énergie pour le cylindre intérieur (7) et le fond (8) est sans fil.

2. Boîte à déjeuner selon la revendication 1, **caractérisée en ce que** le cylindre intérieur (7) est pourvu d'une fente (9) pour un indicateur de niveau de remplissage (10).

3. Boîte à déjeuner selon la revendication 1 ou 2, **caractérisée en ce que** le moyen de recouvrement est pourvu d'un filetage intérieur pour le vissage avec un filetage extérieur de l'enveloppe extérieure (2).

4. Boîte à déjeuner selon l'une des revendications 1 à 3, **caractérisée en ce que** le moyen de recouvrement (3) est pourvu d'au moins une poignée (4) moulée.

5. Boîte à déjeuner selon l'une des revendications 1 à 4, **caractérisée en ce que** le moyen de recouvrement est pourvu d'une ouverture (13) pour la réception d'une tétine (5).

6. Boîte à déjeuner selon l'une des revendications 1 à 5, **caractérisée en ce que** le fond (8) peut être chauffé par induction.

7. Boîte à déjeuner selon l'une des revendications 1 à 6, **caractérisée en ce que** le cylindre intérieur (7) peut être chauffé par induction.

8. Boîte à déjeuner selon l'une des revendications 1 à 7, **caractérisée en ce qu'**elle peut être commandée au moyen d'une application par l'intermédiaire d'un mobile multifonction (15).

9. Boîte à déjeuner selon l'une des revendications 1 à 8, **caractérisée en ce qu'**elle peut être couplée à une station de chargement (12) **et en ce que** la station de chargement (12) est pourvue d'un indicateur de température (11) et/ou d'un moyen de détection de poids.

10. Boîte à déjeuner selon l'une des revendications 1 à 9, **caractérisée en ce qu'**elle peut être commandée et peut fonctionner hors ligne ou en ligne au moyen d'une électronique de commande mise en œuvre.
